# EUROPÄISCHE PATENTSCHRIFT

(11) **EP 0 732 457 B1**
(45) Veröffentlichungstag und Bekanntmachung des Hinweises auf die Patenterteilung: **21.05.2003**
(21) Anmeldenummer: 96104085.4
(22) Anmeldetag: 15.03.1996
(51) Int. Cl.: E03D 5/00

(54) **Verfahren und Vorrichtung zur Wiederverwertung von Grauwasser**
Process and device for reclaiming grey water
Procédé et dispositif de récupération d'eau usagée

(30) Priorität: 16.03.1995 DE 19509531
(43) Veröffentlichungstag der Anmeldung: 18.09.1996
(73) Patentinhaber: Hansgrohe AG, 77761 Schiltach (DE)
(72) Erfinder: Hauser, Dieter, 78554 Aldingen (DE); Heinzelmann, Werner, 72275 Alpirsbach (DE); Nolde, Erwin, 13357 Berlin (DE)
(74) Vertreter: Patentanwälte Ruff, Wilhelm, Beier, Dauster & Partner

(56) Entgegenhaltungen:
- DE-A- 3 508 885
- DE-A- 3 712 421
- DE-A- 4 228 804

## Beschreibung

Die Erfindung geht aus von einer Vorrichtung zur Wiederverwendung von Grauwasser.

Es ist bereits eine Einrichtung zur Substitution von Trinkwasser bei der Toilettenspülung bekannt (DE-PS 37 12 421). Bei dieser bekannten Einrichtung ist ein aufrechtstehender Sammelbehälter für Grauwasser vorgesehen, in dessen unterem Teil ein Schlammsammelraum angeordnet ist. Der sich dort absetzende Schlamm kann bei entsprechend hohem Wasserstand in dem Sammelbehälter durch Wasserdruck oder auch von Hand ausgespült werden. Das Grauwasser wird oberhalb des Schlammsammelraums entnommen. Das Grauwasser wird in dem Sammelbehälter innerhalb eines Standrohrs eingepumpt, wobei parallel eine Druckleitung für Druckluft vorhanden ist. Dadurch kommt es zu einer vollständig ungeregelten und ungeordneten Durchwirbelung des Wassers in dem Grauwasserbehälter. Dies führt dazu, daß bei der Entnahme von Betriebswasser relativ viel aufgewirbelter Schmutz in den Spülkasten gelangt, insbesondere wenn Zulauf und Entnahme zeitlich nahe zusammenliegen, was die Funktion der dort nötigen Ventile beeinträchtigen kann.

Weiterhin bekannt ist eine Einrichtung zur Wiederverwertung von Grauwasser, bei dem das Grauwasser in einen Grauwassersammelbehälter gepumpt wird. In diesem Sammelbehälter sind Matten aus einem faserigen Material stehend und hängend angeordnet, die mit Bakterienkulturen beimpft sind. Auf dem Boden des Vorratsbehälters liegt ein perforierter Schlauch, durch den Luft eingepumpt wird. Ein Absetzen von Schlamm ist nicht möglich, da dieser von der Luftströmung sofort wieder aufgewirbelt und im Wasser verteilt werden würde.

Weiterhin ist eine Spüleinrichtung für Toilettenbecken unter Verwendung von Abwässern bekannt (DE-PS 23 36 744), bei der das aus dem Auslaß einer Badewanne stammende Grauwasser mit Hilfe einer Pumpe in einen Vorratsbehälter gepumpt wird, von dem aus es in einen üblichen Spülkasten für eine Toilettenspülung gelangt.

Ebenfalls bekannt ist eine Anlage zur Wiederverwendung von Abwässern (DE 35 08 885 A1). Bei dieser Anlage wird das Abwasser in einen Behälter geleitet, in dem es vorgeklärt wird. Der Behälter, in den das Abwasser geleitet wird, weist eine Klärkammer mit einem Zulauf und einem Ablauf sowie einen Behälterboden mit einer geschlossenen Fläche auf. In dem Behälter ist ein siebartiger herausnehmbarer Behälter eingesetzt.

Der Erfindung liegt die Aufgabe zugrunde, eine kompakt aufgebaute Grauwasserverwertungsanlage zu schaffen, bei der das Grauwasser zu einem Betriebswasser mit hohem Reinheitsgrad aufbereitet wird, damit es nicht zu einer Geruchsbelästigung kommt und bei der Toilettenspülung keine Schmutzwasserspuren zurückbleiben. Der Einfluß von Schmutzpartikeln auf die Installation der Teile, in denen das Betriebswasser verwendet werden soll, soll möglichst klein werden.

Zur Lösung dieser Aufgabe schlägt die Erfindung eine Vorrichtung mit den im Anspruch 1 genannten Merkmalen sowie ein Verfahren nach dem Anspruch 14 vor. Weiterbildungen der Erfindung sind Gegenstand von Unteransprüchen.

Durch die Verwendung mindestens zweier getrennter Behälter, die durch eine Leitung miteinander verbunden sind, wird es möglich, daß bereits im ersten Behälter eine Abscheidung oder Absetzung der Schmutzpartikel erfolgt, so daß in den zweiten Behälter nur Grauwasser gelangt, das schon eine höhere Reinheit aufweist. Der im ersten Behälter abgesetzte Schlamm kann daher gar nicht erst in den zweiten Behälter gelangen, so daß gegebenenfalls durchgeführte Maßnahmen zur mechanischen Bewegung des Wassers nicht zu einer Schlammaufwirbelung führen. Es ist jedoch zur weiteren Steigerung der Reinheit auch vorgesehen, daß ein dritter Grauwasserspeicher vorhanden ist, der jeweils an den letzten Behälter zusätzlich angeschlossen wird. Die Grauswasserspeicher sind dadurch kaskadenartig hintereinandergeschaltet, so daß in den jeweils folgenden Grauwasserspeicher nur Wasser mit einer schon verbesserten Reinheit gelangt, das dort nochmals verbessert wird.

Es kann erfindungsgemäß vorgesehen sein, daß auch der zweite Grauwasserspeicher und gegebenenfalls auch der jeweils nächste Grauwasserspeicher einen Schlammablaß aufweist.

Insbesondere kann vorgesehen sein, daß das Volumen der Grauwasserspeicher bei der Hintereinanderschaltung abnimmt, so daß der erste Grauwasserspeicher, in den also das noch nicht bearbeitete Grauwasser eingebracht wird, das größte Volumen aufweist.

Erfindungsgemäß kann vorgesehen sein, daß der Boden des Grauwasserspeichers zur Bildung eines Schlammsammelraums trichterförmig ausgebildet ist. Diese Trichterform hat den Vorteil, daß der Schlamm längs der Trichterwände langsam nach unten wandern kann, so daß er an der tiefsten Stelle in eine Schlammablaßleitung eintreten kann.

Es kann erfindungsgemäß vorgesehen sein, daß jeder Grauwasserspeicher einen eigenen Sammelraum für den Schlamm aufweist. Es ist jedoch ebenfalls möglich, daß alle Grauwasserspeicher einen gemeinsamen Schlammsammelraum aufweisen. Dieser kann derart ausgebildet sein, daß ein Aufwirbeln oder ein Zurückgelangen des Schlamms in den eigentlichen Grauwasserspeicher nicht mehr möglich ist.

Erfindungsgemäß kann vorgesehen sein, daß der Schlammablaß des Grauwasserspeichers ein manuell betätigbares Ventil aufweist. Der Benutzer einer solchen Vorrichtung kann dann in regelmäßigen Abständen durch kurzes Öffnen dieses Ventils den Schlamm ablassen. Da der schlammablaß immer an der untersten Stelle des Grauwasserspeichers angeordnet ist, steht auch genügend Druck zur Verfügung, um den Schlamm auszuspülen.

Es ist jedoch ebenfalls möglich, hier elektrisch oder hydraulisch betätigte Ventile zu verwenden, so daß ein regelmäßiges Wegspülen des Schlamms in Abhängigkeit von bestimmten Ereignissen, gegebenenfalls auch zeitabhängig, durchgeführt werden kann.

Erfindungsgemäß kann vorgesehen sein, daß die Schlammablässe aller Grauwasserspeicher ein gemeinsames Ventil aufweisen.

Um zu verhindern, daß bei Befüllen des ersten Grauwasserspeichers mit Grauwasser dieses sofort in den zweiten Speicher gelangt, kann erfindungsgemäß vorgesehen sein, daß die Verbindung zwischen den Grauwasserspeichern unterbrochen werden kann, d. h., daß die die an sich vorhandene Verbindung nur unter bestimmten Bedingungen wirksam ist.

Eine Möglichkeit besteht darin, daß zur Herstellung und Unterbrechung der Verbindung ein Ventil und/oder eine Pumpe in einer Verbindungsleitung vorgesehen ist. Es ist dann beispielsweise möglich, nach einer bestimmten Zeit nach Befüllen des ersten Grauwasserspeichers das Wasser in den zweiten Grauwasserspeicher zu pumpen oder laufen zu lassen, falls die Behälter nicht auf gleicher Höhe sind. Es kann hierbei durch richtige Anordnung der Mündungen der Leitungen, durch das Vorsehen von Leitblechen o. dgl. dafür gesorgt werden, daß das Fließen des Wassers durch die Verbindungsleitung nicht zum Aufwirbeln oder zum Ansaugen von Schlamm oder Schwebstoffen führt.

Die Herstellung der Verbindung und ihre Unterbrechung kann sowohl zeitabhängig als auch beispielsweise vom Wasserstand abhängig ausgelöst werden.

In Weiterbildung der Erfindung kann vorgesehen sein, daß die Grauwasserspeicher im wesentlichen auf gleicher Höhe angeordnet sind und die Verbindung zwischen ihnen durch offene Leitungen erfolgt, die oberhalb des Schlammsammelraums aber unterhalb eines Mindestwasserstands münden. Dadurch stellt sich in beiden auf diese Weise miteinander verbundenen Behältern ein gleicher Wasserstand ein. Diese Art der Herstellung der Verbindung hat den Vorteil, daß keine zusätzlichen Einrichtungen wie Ventile oder Pumpen benötigt werden. Wenn man davon ausgeht, daß die Entnahme des Betriebswassers und das Einpumpen des Grauwassers nicht zu plötzlich oder zu ruckartig erfolgen, so kann in einem halbwegs kontinuierlichen Betrieb auch diese Art der Verbindung dazu dienen, das Wasser erst nach einer bestimmten Verweildauer in den zweiten Behälter zu übernehmen. In nochmaliger Weiterbildung der Erfindung kann vorgesehen sein, mindestens in dem ersten Grauwasserspeicher Schwebkörper mit einer großen Oberfläche einzusetzen, die ein spezifisches Gewicht im Bereich von 1 haben und daher im Wasser schweben. Sie dienen aufgrund ihrer großen Oberfläche zur Ansammlung von Schmutzpartikeln. Es ist auch möglich und wird von der Erfindung vorgeschlagen, diese Schwebkörper mit Bakterien zu impfen, die die Schmutzteile im Grauwasser verarbeiten und/oder binden. In diesem Fall ist es möglich, beispielsweise auch einen Austausch der Schwebkörper und ihre Regenerierung in regelmäßigen Abständen durchzuführen.

Um das Grauwasser in dem Grauwasserspeicher ständig in Bewegung zu halten, ohne es zu stark zu verwirbeln, kann erfindungsgemäß eine Belüftungseinrichtung vorgesehen werden, die Luft im unteren Bereich des Grauwasserspeichers einbläst, und zwar vorzugsweise oberhalb des Schlammsammelraums. Der Austritt der Luft kann so eingestellt werden, daß eine bestimmte kontinuierliche langsame Strömung des Wassers erreicht wird, wobei im unteren Bereich Leitbleche eingesetzt werden, die es verhindern, daß die Strömung den Schlammsammelraum erreicht. Diese langsame Durchströmung des Grauwasserspeichers ist insbesondere in Kombination mit den bakterienbeimpften Schwebkörpern von Vorteil.

Erfindungsgemäß kann vorgesehen sein, daß oberhalb des Schlammsammelraums ein Gitterrost angeordnet ist, dessen Öffnungen kleiner als die Schwebkörper sind. Dadurch wird eine Berührung zwischen den Schwebkörpern und dem Schlamm verhindert. Es kann insbesondere auch vorgesehen sein, daß der Gitterrost teilweise hohl ist, so daß er als Austrittseinrichtung für die Belüftungseinrichtung dienen kann.

Die Entnahmestelle des letzten Grauwasserspeichers in der Reihe kann erfindungsgemäß mit einem Spülkasten einer Toilettenspülung verbunden sein. Hier kann ein normaler Spülkasten Verwendung finden.

Es ist jedoch ebenfalls möglich und wird von der Erfindung vorgeschlagen, daß der letzte Grauwasserspeicher direkt mit einem Toilettenspülventil verbunden ist, so daß sein unterer Teil selbst als Spülkasten dienen kann.

Erfindungsgemäß kann vorgesehen sein, daß für den Einlaß.des Grauwassers in den ersten Grauwasserspeicher eine Pumpe vorgesehen ist. Der Grauwasserspeicher kann beispielsweise in einem Badezimmer als flacher Kasten vor der Wand angebracht sein, der, um ein ausreichendes Volumen zu erreichen, relativ hoch hinaufreichen muß. Um nun das Grauwasser aus dem Auslauf der Badewanne verwenden zu können, ist eine solche Pumpe sinnvoll.

Erfindungsgemäß kann hinter dieser Pumpe ein rückspülbares Filter angeordnet sein, das in regelmäßigen Abständen oder durch bestimmte Ereignisse ausgelöst rückgespült wird.

Eine aus Sicherheitsgründen nötige Leitungswassereinspeisung kann erfindungsgemäß in dem letzten Grauwasserspeicher oder Toilettenspülkasten vorgesehen werden. Es kann hier auch eine Sicherheitseinrichtung vorgesehen werden, die bei längerem Stillstand oder bei zu starkem Absinken eine Nachfüllung mit Leitungswasser automatisch durchführt. Dieses Leitungswasser kann durch die Verbindungsleitungen zwischen den einzelnen Speichern auch bis in den ersten Speicher gelangen.

Die Erfindung schlägt vor, in den Grauwasserspeichern eine Einrichtung zur Aufrechterhaltung eines minimalen Wasserstands anzuordnen. Der minimale Wasserstand wird vorzugsweise derart bemessen, daß die in den Speichern vorhandenen Schwebkörper noch vollständig im Wasser verbleiben.

Die Erfindung schlägt vor, den Luftdruck der eingeblasenen Luft von dem Wasserstand abhängig zu machen, insbesondere ihn so einzurichten, daß er proportional zum Wasserstand wird. Wenn diese Maßnahme durchgeführt wird, so wird es möglich, dafür zu sorgen, daß bei geringem Wasserstand mit nur geringem Luftdruck eingeblasen wird, damit keine zu starke Strömung entsteht. Insbesondere kann auch vorgesehen sein, daß bei Unterschreiten eines bestimmten unteren Wasserstands die Belüftungseinrichtung abgeschaltet wird.

Die Erfindung schlägt ebenfalls ein Verfahren vor, das die im Anspruch 14 aufgeführten Merkmale aufweist. Bei dem Verfahren können einzeln und in Kombination Merkmale vorhanden sein, die oben erwähnt wurden. Sie werden hier im Zusammenhang mit dem Verfahrensanspruch nicht nochmals im Wortlaut wiederholt.

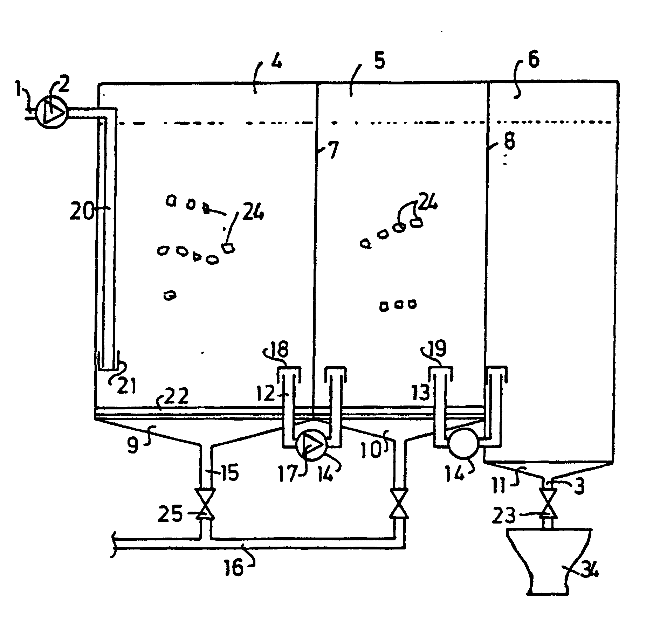

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigt die einzige Zeichnungsfigur schematisch die Anordnung einer Vorrichtung zur Wiederverwertung von Grauwasser mit drei miteinander verbundenen Grauwasserspeichern abnehmender Größe.

Die in der Figur dargestellte Anlage soll dazu dienen, Grauwasser so aufzubereiten, daß es als Betriebswasser für eine Toilettenspülung verwendet werden kann. Das Grauwasser stammt beispielsweise von dem Ablauf einer Bade- oder Duschwanne und wird von dort mit Hilfe einer Leitung 1 und ggf. einer Pumpe 2 in die Anlage eingepumpt. Aus der Anlage heraus führt dann eine Betriebswasserleitung 3, die zur Spülung einer Klosettschüssel 34 dient.

Die Anlage enthält drei in der dargestellten Ausführungsform nebeneinander im wesentlichen auf gleicher Höhe angeordnete Grauwasserbehälter 4, 5, 6, die auch als einziger Behälter mit entsprechenden Trennwänden 7, 8 ausgebildet sein können. Wichtig ist, daß eine Verbindung zwischen den einzelnen Grauwasserspeichern 4, 5, 6 nur in definierter Weise vorgesehen ist. In der Zeichnung nicht dargestellt sind Einrichtungen, die einen Überlauf für die Speicher bilden, gegebenenfalls Wasserstandsanzeigen und dergleichen.

Jeder Grauwasserspeicher 4, 5, 6 enthält einen trichterartig ausgebildeten Boden 9, 10, 11. An der tiefsten Stelle des trichterartigen Bodens ist ein Auslauf 15 gebildet, der bei den ersten beiden Grauwasserspeichern 4, 5 über eine Leitung 16 mit der Kanalisation verbunden ist.

Aus dem ersten Grauwasserspeicher 4 führt eine etwa U-förmige Leitung 12 durch den Boden in den Bereich unterhalb des Grauwasserspeichers 4 und von dort mit dem zweiten Schenkel in den Grauwasserspeicher 5. Eine ähnliche U-förmige Leitung 13 ist für die beiden rechten Grauwasserspeicher 5, 6 vorgesehen.

Die Leitungen könnten auch über den oberen Behälterrand geführt werden.

In dem Bereich der beiden U-förmigen Leitungen 12, 13 außerhalb der Grauwasserspeicher ist ein Gehäuse 14 angeordnet, in dem beispielsweise eine in einer Richtung betreibbare Pumpe 17 angeordnet sein kann. Wie bei der U-förmigen Leitung 13 angedeutet ist, kann die Pumpe 17 auch weggelassen werden, da eine Verbindung nach Art kommunizierender Röhren ausreichen kann.

Die Mündungen der U-förmigen Leitungen 12, 13 sind mit Hilfe von Leitblechen 18, 19 gegen eine direkte Strömung abgeschirmt. Die Anordnung der Leitbleche 18, 19 ist nur schematisch dargestellt.

In den in der Figur linken Grauwasserspeicher 4, der das größte Volumen der drei Grauwasserspeicher aufweist, führt die Ausgangsleitung 20 der Pumpe 2. Diese Leitung 20 ist bis in den unteren Bereich des Grauwasserspeichers 4 gefüht und dort ebenfalls mit einem Leitblech 21 versehen. Unmittelbar oberhalb des trichterförmigen Bodens 9, 10 der beiden ersten Grauwasserspeicher 4, 5 ist ein Hohlgitter 22 angeordnet. Das Hohlgitter 22 weist an seiner Oberseite eine Vielzahl von Luftaustrittsöffnungen auf. In das Hohlgitter 22 wird von einer nicht dargestellten Luftdruckquelle Druckluft eingeblasen, die aus den Austrittsöffnungen austritt und innerhalb des Wassers in dem Grauwasserspeicher 4, 5 nach oben steigt. Die Strahlaustrittsöffnungen können dabei so angeordnet sein, daß die Strömung nicht an allen Stellen entsteht, sondern beispielsweise nur an der Vorderseite oder nur an der Rückseite, so daß ein sich gleichmäßig einstellendes Strömungsmuster auftreten kann.

Anstatt durch das Hohlgitter kann die Luft auch in einem separat verlegten Kanal geführt und ausgeleitet werden.

Während die trichterförmigen Böden 9, 10 der beiden ersten Grauwasserspeicher 4, 5 über die entsprechenden Abflußleitungen 15, 16 zur Kanalisation führen, führt aus dem Trichterboden 11 des letzten Grauwasserspeichers 6 die Leitung 3 über ein Spülventil 23, das von Hand betätigbar ist, direkt zu der Klosettschüssel 34.

Die dargestellte Anlage arbeitet nach folgendem Verfahren.

Zunächst wird durch Betätigen der Pumpe 2 Grauwasser über die Leitung 20 in den ersten Grauwasserspeicher 4 eingepumpt. In dem Grauwasserspeicher 4 befinden sich eine Vielzahl von angedeuteten Schwebkörpern 24, bei denen es sich um kleine Körper mit einer relativ großen Oberfläche und einem spezifischen Gewicht in der Nähe von 1 handelt. Die Schwebkörper können mit Bakterien geimpft sein, die Verunreinigungen im Grauwasser so zersetzen, daß sie ausgefällt werden, und sich im Schlammsammelraum absetzen.

Das Wasser steigt in dem ersten Grauwasserspeicher 4 an, bis es den oberen Rand der U-förmigen Verbindungsleitung 12 erreicht. Wird die Pumpe nicht betrieben, so steigt das Wasser weiter an, ohne daß es in den zweiten Grauwasserspeicher 5 gelangt. Das Wasser steigt so lange an, wie die Pumpe 2 Grauwasser fördert, begrenzt nur durch einen maximalen Wasserstand, der durch einen Überlauf verwirklicht werden kann. Während das Grauwasser in dem ersten Grauwasserspeicher 4 verweilt, wird kontinuierlich Luft in das Hohlgitter 22 eingeblasen. Diese Luft steigt nach oben und bewirkt dadurch eine gleichmäßige kontinuierliche Umwälzung des Wassers in dem Grauwasserspeicher. Dadurch gelangen die Schwebkörper 24 zusammen mit dem Wasser in Bewegung, so daß die Schwebkörper 24 die Chance haben, mit jedem Bereich des Wassers in Berührung zu kommen. Die Schmutzteile des Grauwassers werden von den Bakterien auf und in den Schwebkörpern 24 zersetzt, und die entstehende Biomasse sinkt als Schlamm ab. Größere oder schwerere Schmutzpartikel setzen sich ebenfalls nach unten ab, da die Strömung kontinuierlich und langsam ist, so daß sie nicht aufgewirbelt werden. Die Schmutzpartikel setzen sich bis nach unten unterhalb des Hohlgitters 22 ab, wo sie dann nicht mehr in einer Strömung liegen. Sie bleiben dort liegen und sammeln sich in dem mehr oder weniger flachen Trichter 9 an. Der Raum innerhalb des Trichters bildet also einen Schlammsammelraum.

Sobald das Grauwasser im ersten Grauwasserspeicher 4 einigermaßen vorgereinigt ist, kann die Pumpe 17 in der U-förmigen Leitung 12 in Betrieb genommen werden. Sie pumpt dann das vorgereinigte Grauwasser in den zweiten Grauwasserspeicher 5, der zwar etwas kleiner ist als der erste Grauwasserspeicher 4, aber den gleichen Aufbau aufweist. Auch hier sind Schwebkörper 24 vorhanden. Sie sind von den gleichen oder auch anderen Bakterien besiedelt. Hier tritt der gleiche Vorgang auf, d. h. das Wasser wird durch eine Luftströmung kontinuierlich umgewälzt, so daß die Bakterien auf den Schwebkörpern 24 ihre Reinigungsarbeit im gesamten Volumen des Wassers ausführen können. Die etwas schwereren Schmutzpartikel haben wieder die Möglichkeit, sich nach unten abzusetzen, durch den Gitterrost des Hohlgitters 22 hindurchzusinken und sich im Trichter 10 zu sammeln.

Von Zeit zu Zeit kann der Benutzer durch Öffnen der in den Schlammauslaßleitungen 15 angeordneten Ventile 25 den Schlamm aus den trichterförmigen Böden 9, 10 herausspülen. Dies ist relativ einfach möglich, da in den Grauwasserspeichern 4, 5 genügend Wasserstand vorhanden ist, um den Schlamm herauszuspülen.

In der U-förmigen Leitung 19, die den zweiten mit dem dritten Grauwasserspeicher verbindet, kann ebenfalls eine Pumpe 17 eingebaut sein. Hier würde wiederum die Pumpe in Betrieb genommen, wenn das Wasser in dem zweiten Grauwasserspeicher 5 entsprechend länge verweilt hat, so daß es nochmals sauberer geworden ist. Auch in dem dritten Grauwasserspeicher 6 könnte eine Belüftungseinrichtung sowie Schwebkörper 24 vorhanden sein. Aus Gründen der Vereinfachung ist dies nicht dargestellt. Sobald auch im dritten (Grauwasser)Speicher 6 genügend (Grau)Wasser vorhanden ist, kann durch Betätigen des Ventils 23 ein Spülvorgang durchgeführt werden. Dabei gelangt dieses "Betriebswasser" durch das Ventil 23 und die Leitung 3 direkt in die Klosettschüssel 34. Etwa noch vorhandene Schmutzteilchen können bei diesem Spülvorgang mit beseitigt werden. Sie würden bei diesem Spülvorgang auch am Anfang des Wasserstoßes angeordnet sein, da sie sich ebenfalls in den trichterförmigen Boden 11 angesammelt haben. Der restliche Teil des Spülstoßes hat daher saubereres Wasser, das damit auch Schlammteilchen wegspült.

Aus Gründen der Funktionsfähigkeit auch dann, wenn kein Grauwasser bereitsteht, kann der letzte Grauwasserspeicher 6 einen Anschluß für Stadtwasser aufweisen, der automatisch niveaugesteuert ein- und ausgeschaltet werden kann, sofern ein Bedarf hier vorliegt.

Bei einem einigermaßen kontinuierlichen Betrieb sind alle drei Grauwasserspeicher 4, 5, 6 immer mit Grauwasser gefüllt, dessen Wasserstand sich beispielsweise im mittleren bis oberen Bereich aufhält. Wird nun neues Grauwasser eingepumpt, so steigt der Wasserstand im ersten Grauwasserspeicher 4 nur langsam an, und die Verbindung zum nächsten kann allein durch die Wirkung der Verbindungsleitung 12, sofern keine Pumpe vorhanden ist, durchgeführt werden. Das direkt aus der Leitung 20 austretende Wasser gelangt wegen der Leitbleche 21 und 18 nicht direkt zu der Verbindungsleitung 12, sondern wird durch die Luftströmung noch durch den Behälter 4 bewegt. Es kann also in einem solchen Fall mit einfachen U-förmigen Verbindungsleitungen 12, 13 ausgekommen werden, ohne daß Pumpen erforderlich sind. Es ist dabei sinnvoll, die Mündungen der Verbindungsleitungen oberhalb des Bodens anzuordnen, jedoch unterhalb eines minimalen Wasserstands, der mit Hilfe von geeigneten Einrichtungen aufrechterhalten wird. Diese Verbindungsleitungen könnten auch horizontal als Öffnungen in den Behältertrennwänden ausgebildet sein.

Auch dann, wenn kein neues Grauwasser eingefüllt wird und ein Spülvorgang durchgeführt wird, sinkt der Wasserstand im letzten Grauwasserspeicher 6 nur um einen relativ kleinen Betrag, da die Spülmengen relativ klein sind. Das Nachströmen aus dem Behälter 5 über die Verbindungsleitung 13 und dann aus dem Behälter 4 durch die Verbindungsleitung 12 geschieht ebenfalls relativ langsam, so daß auch in diesem Fall dafür gesorgt ist, daß das Wasser sich in den einzelnen Grauwasserspeichern lange aufhält.

Es ist denkbar, bei jedem Spülvorgang gleichzeitig oder ereignisgesteuert nach einer bestimmten Anzahl von Vorgängen auch ein Ablassen des Schlamms aus den Trichterböden 9, 10 durchzuführen oder auch eine Rückspülung eines hinter der Pumpe 2 angeordneten rückspülbaren Filters.

Während bei der dargestellten Ausführungsform der untere Teil des letzten Grauwasserspeichers 6 gleichzeitig eine Art Spülkasten bildet, wäre es auch denkbar, die Auslaßleitung 3, die hier die Entnahmestelle bildet, in einen üblichen Spülkasten zu führen, aus dem das Wasser dann in der üblichen Weise entnommen wird.

Erfindungsgemäß kann vorgesehen sein, daß der Luftdruck der Druckluft in dem Hohlgitter 22 oder ihre Fördermenge pro Zeiteinheit so eingestellt wird, daß sie vom Wasserstand abhängig ist, vorzugsweise proportional zu diesem ist. Damit kann erreicht werden, daß sowohl bei hohem als auch bei niedrigem Wasserstand eine nur langsame Strömung innerhalb des Behälters auftritt, die nicht zu Verwirbelungen führt, die ein Absinken der Schmutzpartikel verhindern würde. Die Lufteinblasung kann auch intermittierend sein (z.B. 1 Stunde blasen, 1 Stunde Pause).

Beispielsweise kann auch vorgesehen sein, daß bei einem minimalen Wasserstand keine Luft eingeblasen wird.

Die Schwebkörper haben vorzugsweise einen Bakterienbewuchs, der zu Beginn eingeimpft werden kann. Dies ist aber nicht unbedingt erforderlich, da sich ein Bakterienbewuchs von selbst bildet. Diese Bakterien bauen die Schmutzteile in dem Wasser ab und sinken dann als Schlamm nach unten.

Bei den Schwebkörpern 24 im zweiten und auch im dritten Grauwasserspeicher tritt im Prinzip der gleiche Reinigungsvorgang auf. Es können hier jedoch unterschiedliche Bakterienstämme verwendet werden bzw. werden sich unterschiedlich ausbilden.

Auch wenn einmal stärker verschmutztes Wasser aus dem Behälter 4 in den Behälter 5 gelangt, so geschieht dies nur in relativ niedrigen Mengen, so daß der Abbau im Behälter 5 ebenfalls noch durchgeführt werden kann. Im Mittel ist das Grauwasser im zweiten Grauwasserspeicher 5 deutlich stärker gereinigt als im vorhergehenden.

Wird bei zu niedrigem Wasserstand und Wasserbedarf Leitungswasser in den letzten Behälter 6 eingelassen, so kann dieses Leitungswasser durch die Verbindungsleitungen 12, 13 in den vorhergehenden Behälter gelangen, was ebenfalls einen erwünschten Nebeneffekt hat, da hier die Wasserqualität dann auch verbessert wird.

Es kann auch vorgesehen sein, daß das Stadtwasser nicht zurückfließt.

Während bei der dargestellten Ausführungsform der Schlammaustrag mechanisch durch Öffnen der Ventile 25 erfolgt, kann dies auch über elektrisch oder hydraulisch betätigte Ventile automatisch erfolgen. Dies kann rein zeitabhängig oder abhängig vom-Wasserzulauf, dem Wasserstand usw. geschehen. Beispielsweise ist auch ein Schlammaustrag bei jeder Toilettenspülung möglich, beispielsweise durch eine Wasserstrahlpumpe.

Die Erfindung schlägt vor, eine Anlage, so wie sie in der Figur dargestellt ist, als Baueinheit so zusammenzufassen; daß sie als Installationselement an einer Wand einer Toilette oder eines Badezimmers installiert werden kann und nur die Verbindungsleitungen angeschlossen werden müssen. Ein solches flachbauend senkrecht an einer Zimmerwand anbringbares Installationselement kann gegebenenfalls auch Einrichtungen aufweisen, an denen eine Klosettschüssel 34 angebracht werden kann.

Es kann vorgesehen sein, daß unter der Bade- oder Duschwanne, von der das Grauwasser entnommen wird, ein spezieller Abfluß vorgesehen ist, der eine Filtereinrichtung aufweist, die grobe Schmutzteile schon vor der Pumpe 2 zurückhält.

Der bereits erwähnte Minimalwasserstand, der etwa im Bereich der Enden der Verbindungsleitungen 12, 13 liegt, wird so auf das Volumen der Behälter und die Zahl der Schwebkörper 24 abgestimmt, daß diese dann noch im wesentlichen vollständig im Wasser angeordnet sind.

Es kann auch vorgesehen sein, daß der Behälter 6 in der Mitte liegt.

Für sich in den Behältern ggf. ansammelnde Stoffe leichter als Wasser, kann erfindungsgemäß eine Abschöpfeinrichtung vorgesehen sein, die diese Stoffe in die Kanalisation ableitet. Dies kann beispielsweise durch einen Überlauf geschehen.

## Patentansprüche

1. Vorrichtung zur Wiederverwertung von Grauwasser, enthaltend
1.1 einen ersten Grauwasserspeicher (4), der
1.1.1 einen Einlass für Grauwasser aus dem Ablauf einer Badewanne, einer Duschwanne o.dgl.,
1.1.2 einen im Bodenbereich (9) angeordneten Schlammablass, der 1.1.2.1 zu der Kanalisation führt,
1.1.3 eine Umwälzeinrichtung, sowie
1.1.4 einen Grauwasserauslass aufweist,
1.2 zwei weiteren Grauwasserspeichern (5, 6), die jeweils
1.2.1 einen mit dem Grauwasserauslass des jeweils vorhergehenden Grauwasserspeichers (4, 5) verbundenen Grauwassereinlass und
1.2.2 einen Grauwasserausass aufweisen, sowie
1.3 eine Entnahmestelle (3) für das gereinigte Grauwasser, die
1.3.1 mit dem Grauwasserauslass des jeweils letzten Grauwasserspeichers (6) verbunden ist.

2. Vorrichtung nach Anspruch 1, bei der der zweite (4) und gegebenenfalls die weiteren Grauwasserspeicher (5, 6) einen Schlammablaß (15) aufweist.

3. Vorrichtung nach Anspruch 2, bei der der Schlammablaß (15) ein manuell betätigbares Ventil (25) aufweist.

4. Vorrichtung nach einem der vorhergehenden Ansprüche, bei der der Boden (9, 10, 11) des Grauwasserspeichers (4, 5, 6) trichterförmig zur Bildung eines Schlammsammelraums ausgebildet ist.

5. Vorrichtung nach einem der vorhergehenden Ansprüche, bei der alle Grauwasserspeicher (4, 5, 6) einen gemeinsamen Schlammsammelraum aufweisen, wobei insbesondere der Schlammablaß aller Grauwasserspeicher (4, 5, 6) ein gemeinsames Ventil aufweist.

6. Vorrichtung nach einem der vorhergehenden Ansprüche, bei der die Verbindung zwischen den Grauwasserspeichern (4, 5, 6) unterbrochen und wieder hergestellt werden kann, ggf. zur Bildung einer Rückflußverhinderung nur in einer Richtung, wobei insbesondere zur Herstellung bzw. Unterbrechung der Verbindung zwischen den Grauwasserspeichern (4, 5, 6) ein Ventil und/oder eine Pumpe (14) vorgesehen ist und/oder die Herstellung bzw. Unterbrechung der Verbindung zwischen den Grauwasserspeichern (4, 5, 6) zeit- und/oder wasserstandsabhängig ausgelöst wird.

7. Vorrichtung nach einem der vorhergehenden Ansprüche, bei der die Grauwasserspeicher (4, 5, 6) im wesentlichen auf gleicher Höhe angeordnet sind und die Verbindung durch offene Leitungen (12, 13) erfolgt, die oberhalb des Schlammsammelraums, vorzugsweise unterhalb eines Mindestwasserstands münden.

8. Vorrichtung nach einem der vorhergehenden Ansprüche, bei der mindestens in dem ersten Grauwasserspeicher (4), vorzugsweise in allen Grauwasserspeichern (4, 5, 6) Schwebkörper (24) mit einer großen Oberfläche eingesetzt sind, die vorzugsweise mit Bakterien geimpft sind.

9. Vorrichtung nach einem der vorhergehenden Ansprüche, mit einer Belüftungseinrichtung, die im unteren Bereich der Grauwasserspeicher oberhalb des Schlammsammelraums Luft in den Grauwasserspeicher (4, 5, 6) einbläst, wobei insbesondere der Luftdruck und/oder die Menge der mit Hilfe der Belüftungseinrichtung eingeblasenen Luft von dem Wasserstand abhängig ist, insbesondere proportional zu diesem ist.

10. Vorrichtung nach einem der vorhergehenden Ansprüche, mit einem Gitterrost (22), vorzugsweise oberhalb des Schlammsammelraums, dessen Rasteröffnungen gegebenenfalls kleiner als die Schwebkörper (24) sind.

11. Vorrichtung nach einem der vorhergehenden Ansprüche, bei der die Entnahmestelle mit einem Spülkasten einer Toilettenspülung und/oder mit einem Spülventil (23) einer Toilettenspülung verbunden ist.

12. Vorrichtung nach einem der vorhergehenden Ansprüche, bei der für den Einlaß des Grauwassers in den ersten Grauwasserspeicher (4) eine Pumpe (2) vorgesehen ist, hinter der ggf. ein rückspülbares Filter angeordnet ist.

13. Vorrichtung nach einem der vorhergehenden Ansprüche, mit einer Leitungswassereinspeisung im letzten Grauwasserspeicher (6) und/oder einer Einrichtung zur Aufrechterhaltung eines Minimalwasserstands, der derart bemessen ist, daß die Schwebkörper (24) im wesentlichen vollständig im Grauwasser verbleiben.

14. Verfahren zur Wiederverwertung von Grauwasser, bei dem
14.1 Grauwasser in einen ersten Grauwasserspeicher (4) eingebracht wird,
14.2 in dem ersten Grauwasserspeicher (4) umgewälzt wird, wobei
14.3 darin enthaltene Verunreinigungen sich absetzen können,
14.4 das Wasser nach einer gewissen Verweildauer in einen zweiten Grauwasserspeicher (5) gebracht, so daß as sich
14.5 in diesem zweiten Grauwasserspeicher (5) bewegt, wobei
14.6 sich darin enthaltene Verunreinigungen absetzen können,
14.7 das Grauwasser aus dem zweiten Grauwasserspeicher (5) ausgelassen und in einen dritten Grauwasserspeicher (6) eingelassen wird, aus dem es bei Bedarf entnommen wird.

15. Verfahren nach Anspruch 14, bei dem das Grauwasser durch Einblasen von Druckluft im unteren Bereich des Grauwasserspeichers umgewälzt wird.

16. Verfahren nach einem der Ansprüche 14 bis 15, bei dem in das Grauwasser Schwebkörper mit Bakterien eingebracht und mitbewegt werden.

17. Verfahren nach einem der Ansprüche 14 bis 16, bei dem in regelmäßigen Abständen der abgelagerte Schlamm entfernt wird.

18. Verfahren nach einem der Ansprüche 14 bis 17, bei dem das in Stufen gereinigte Grauwasser in einen Betriebswasserspeicher geleitet wird, wobei vorzugsweise in der Überleitung zum Betriebswasserspeicher eine UV-Entkeimung vorgesehen ist.

19. Verfahren nach einem der Ansprüche 14 bis 18, bei dem Stoffe, die leichter sind als Wasser, abgeschöpft werden.

## Claims

1. A device for recycling greywater, comprising
1.1. a first greywater storage reservoir (4) that provides
1.1.1 an intake for greywater from the drainage of a bathtub, shower tub or the like,
1.1.2 a sludge drain arranged at the bottom area (9), which
1.1.2.1 leads to the drainage system,
1.1.3 a circulation device, as well as
1.1.4 a greywater outlet,
1.2 at least two other greywater storage reservoirs (5, 6) that each
1.2.1 feature a greywater intake that is connected to the greywater outlet of the respective prior greywater storage reservoir (4, 5) and
1.2.2 a greywater outlet, as well as
1.3 a removal place (3) for the purified greywater, which
1.3.1 is connected with the greywater outlet of the last respective greywater storage reservoir (6).

2. A device according to claim 1, in which the second (4) and as necessary the other greywater storage reservoirs (5, 6) provides a sludge drain (15).

3. A device according to claim 2, in which the sludge drain (15) features a manually activated valve (25).

4. A device according to one of the previous claims, in which the bottom (9, 10, 11) of the greywater storage reservoir (4, 5, 6) is designed as a bin, forming a sludge collection area.

5. A device according to one of the previous claims, in which all greywater storage reservoirs (4, 5, 6) feature a shared sludge collecting area, wherein particularly the sludge drain of all the greywater storage reservoirs (4, 5, 6) provides a shared valve.

6. A device according to one of the previous claims, in which the connection between the greywater storage reservoirs (4, 5, 6) can be interrupted and reestablished, where applicable to form a back flow prevention in only one direction, wherein particularly for establishing and/or interrupting the connection between the greywater storage reservoirs (4, 5, 6) a valve and/or a pump (14) is provided and/or establishing and/or interrupting the connection between the greywater storage reservoirs (4, 5, 6) is time-released or triggered by the water level.

7. A device according to one of the previous claims, in which the greywater storage reservoirs (4, 5, 6) are arranged at essentially the same height and the connection occurs by means of open-ended pipes (12, 13) that empty above the sludge collecting space, preferably below a minimum water level.

8. A device according to one of the previous claims, in which suspended solids (24) with a large surface area that are preferably injected with bacteria are used in the first greywater storage reservoir (4), preferably in all the greywater storage reservoirs (4, 5, 6).

9. A device according to one of the previous claims, with an aeration device that blows air into the greywater storage reservoir (4, 5, 6) in the lower area of the greywater storage reservoirs above the sludge collection area, wherein particularly the air pressure and/or the amount of air blown in by the aeration device is dependent upon the water level, in particular proportional to it.

10. A device according to one of the previous claims, with a grate (22), preferably over the sludge collecting space, the grid openings of which are smaller than the suspension solids (24) if need be.

11. A device according to one of the previous claims, in which the removal place is connected to a flush tank of a toilet flushing installation and/or to a flush valve (23) of a toilet flushing installation.

12. A device according to one of the previous claims, in which a pump (2) is provided for the intake of greywater into the first greywater storage reservoir (4), behind which a reverse flush filter is arranged if need be.

13. A device according to one of the previous claims with a tap water feed in the last greywater storage reservoir (6) and/or a device for sustaining a minimal water level given dimensions such that the suspension solids (24) remain essentially completely in the greywater.

14. A process for recycling greywater, in which
14.1 greywater is introduced into a first greywater storage reservoir (4),
14.2 circulation occurs in the first greywater storage reservoir (4), wherein
14.3. crud contained therein is able to settle,
14.4. the water is brought into a second greywater storage reservoir (5) after a certain retention period, such that
14.5. it circulates within this second greywater storage reservoir (5), wherein
14.6. crud contained therein is able to settle,
14.7. the greywater is let out of the second greywater storage reservoir (5) and led into at least one other greywater storage reservoir (6) and
14.8 removed from the last greywater storage reservoir.

15. A process according to claim 14, in which the greywater is circulated by means of blowing in compressed air at the bottom of the greywater storage reservoir.

16. A process according to one of claims 14 through 15, in which suspended solids with bacteria are introduced into the greywater and circulated.

17. A process according to one of claims 14 through 16, in which the built up sludge is removed at regular intervals.

18. A process according to one of claims 14 through 17, in which the greywater, which is purified in stages, is piped into an operating water storage reservoir, wherein preferably a UV-disinfection is provided in the transfer to the operating water storage reservoir.

19. A process according to one of claims 14 through 18, in which substances that are lighter than water are skimmed off.

## Revendications

1. Dispositif de recyclage des eaux grises, comprenant
1.1 un premier réservoir d'eaux grises (4), lequel présente
1.1.1 une admission des eaux grises au niveau de l'évacuation d'une baignoire, d'un bac à douche ou autre,
1.1.2 une évacuation des dépôts de boue disposée dans le fond (9), menant
1.1.2.1 au réseau d'égouts,
1.1.3 un dispositif de recirculation et également
1.1.4 une évacuation des eaux grises,
1.2 au minimum deux autres réservoirs d'eaux grises (5, 6) présentant chacun
1.2.1 une admission des eaux grises reliée à l'évacuation des eaux grises du réservoir d'eaux grises en amont (4, 5) et
1.2.2 une évacuation des eaux grises et également
1.3 un point de prélèvement (3) de l'eau épurée,
1.3.1 relié à l'évacuation des eaux grises du dernier réservoir d'eaux grises (6).

2. Dispositif selon la revendication 1, sur lequel le deuxième (4) et, le cas échéant, les autres réservoirs d'eaux grises (5, 6) présente(nt) une évacuation des dépôts de boue (15).

3. Dispositif selon la revendication 2, sur lequel l'évacuation des dépôts de boue (15) présente une vanne à commande manuelle (25).

4. Dispositif selon une des revendications précédentes, sur lequel le fond (9, 10, 11) du réservoir d'eaux grises (4, 5, 6) se présente sous forme de trémie, constituant ainsi une zone de collecte des dépôts de boue.

5. Dispositif selon une des revendications précédentes, sur lequel tous les réservoirs d'eaux grises (4, 5, 6) présentent une zone commune de collecte des dépôts de boue, et plus particulièrement l'évacuation des dépôts de boue de tous les réservoirs d'eaux grises (4, 5, 6) présente une vanne commune.

6. Dispositif selon une des revendications précédentes, sur lequel la liaison entre les réservoirs d'eaux grises (4, 5, 6) peut être interrompue et rétablie, le cas échéant, pour empêcher le reflux uniquement dans un seul sens ; une vanne et/ou une pompe (14) étant plus particulièrement prévue pour établir ou interrompre la liaison entre les réservoirs d'eaux grises (4, 5, 6), et/ou l'établissement ou l'interruption de la liaison entre les réservoirs d'eaux grises (4, 5, 6) se déclenchant en fonction d'un laps de temps et/ou du niveau d'eau.

7. Dispositif selon une des revendications précédentes, sur lequel les réservoirs d'eaux grises (4, 5, 6) sont disposés pour l'essentiel à la même hauteur et la liaison s'effectue par des conduites ouvertes (12, 13), qui débouchent au-dessus de la zone de collecte des dépôts de boue, de préférence en dessous d'un niveau d'eau minimum.

8. Dispositif selon une des revendications précédentes, sur lequel au minimum dans le premier réservoir d'eaux grises (4), de préférence dans tous les réservoirs d'eaux grises (4, 5, 6), sont mis en place des corps flottants (24) de grande surface qui sont de préférence ensemencés en bactéries.

9. Dispositif selon une des revendications précédentes, muni d'un dispositif d'aération qui insuffle de l'air dans la partie inférieure des réservoirs d'eaux grises au-dessus de la zone de collecte des dépôts de boue (4, 5, 6), le débit d'air et/ou le volume d'air insufflé à l'aide du dispositif d'aération étant plus particulièrement fonction du niveau d'eau, et plus précisément proportionnel à celui-ci.

10. Dispositif selon une des revendications précédentes, muni d'une grille (22), de préférence au-dessus de la zone de collecte des dépôts de boue, dont les ouvertures sont, le cas échéant, plus petites que les corps flottants (24).

11. Dispositif selon une des revendications précédentes, sur lequel le point de prélèvement est relié à un réservoir de chasse d'eau et/ou une vanne de vidange (23) de chasse d'eau.

12. Dispositif selon une des revendications précédentes, sur lequel est prévue une pompe (2) pour l'admission des eaux grises dans le premier réservoir d'eaux grises (4), pompe derrière laquelle est disposé le cas échéant un filtre à contre-courant.

13. Dispositif selon une des revendications précédentes, muni d'une alimentation en eau de ville dans le dernier réservoir d'eaux grises (6) et/ou d'un dispositif de maintien d'un niveau d'eau minimum qui est dimensionné de telle sorte que les corps flottants (24) restent pour l'essentiel entièrement dans les eaux grises.

14. Procédé de réutilisation d'eaux grises par lequel
14.1 les eaux grises sont amenées dans le premier réservoir d'eaux grises (4) et
14.2 mises en circulation dans le premier réservoir d'eaux grises (4),
14.3 les impuretés qu'elles contiennent pouvant ainsi se déposer ;
14.4 au bout d'un certain temps, les eaux sont amenées dans un deuxième réservoir d'eaux grises (5),
14.5 elles circulent alors dans le deuxième réservoir d'eaux grises (5),
14.6 les impuretés qu'elles contiennent pouvant ainsi se déposer ;
14.7 les eaux grises sortent du deuxième réservoir d'eaux grises (5) et sont amenées dans au minimum un autre réservoir d'eaux grises (6) et
14.8 sont extraites du dernier réservoir d'eaux grises.

15. Procédé selon la revendication 14, suivant lequel les eaux grises circulent dans la partie inférieure du réservoir d'eaux grises grâce à l'insufflation d'air comprimé.

16. Procédé selon une des revendications 14 à 15, suivant lequel des corps flottants ensemencés en bactéries sont introduits dans les eaux grises et mélangés avec celles-ci.

17. Procédé selon une des revendications 14 à 16, suivant lequel les dépôts de boue sont éliminés à des intervalles réguliers.

18. Procédé selon une des revendications 14 à 17, suivant lequel les eaux grises épurées par étapes sont amenées dans un réservoir d'eau recyclée, un dégermage aux rayons UV étant de préférence prévu dans le passage menant au réservoir d'eau recyclée.

19. Procédé selon une des revendications 14 à 18, suivant lequel les matières plus légères que l'eau sont prélevées à la surface.
